# EUROPÄISCHE PATENTSCHRIFT

(11) **EP 2 847 567 B1**
(45) Veröffentlichungstag und Bekanntmachung des Hinweises auf die Patenterteilung: **26.06.2019**
(21) Anmeldenummer: 13721939.0
(22) Anmeldetag: 30.04.2013
(51) Int. Cl.: G01L 19/06, G01L 23/08, F23Q 7/00

(54) **MEMBRANBAUGRUPPE FÜR EINE DRUCKMESSEINRICHTUNG**
MEMBRANE ASSEMBLY FOR A PRESSURE MEASURING DEVICE
ENSEMBLE MEMBRANE POUR UN DISPOSITIF DE MESURE DE PRESSION

(30) Priorität: 11.05.2012 DE 102012207861
(43) Veröffentlichungstag der Anmeldung: 18.03.2015
(73) Patentinhaber: Robert Bosch GmbH, 70442 Stuttgart (DE)
(72) Erfinder: DOERING, Christian, 70563 Stuttgart (DE); WOLFF, Janpeter, 75449 Wurmberg (DE); GUGEL, Denis, 70839 Gerlingen (DE); LEOPOLD, Stefan, 74366 Kirchheim am Neckar (DE); KOETZLE, Wolfgang, 71139 Ehningen (DE)
(86) Internationale Anmeldenummer: PCT/EP2013/058950
(87) Internationale Veröffentlichungsnummer: WO 2013/167422

(56) Entgegenhaltungen:
- EP-A2- 0 226 742
- WO-A1-2009/146565
- WO-A2-2013/079661
- DE-A1- 2 156 959
- DE-A1- 2 544 505
- DE-A1- 3 727 221
- GB-A- 963 934
- US-A- 5 325 720
- US-A1- 2004 231 425
- US-A1- 2010 147 822

## Beschreibung

### Stand der Technik

Die Erfindung geht aus einer Membranbaugruppe nach Gattung gemäß dem Oberbegriff des unabhängigen Anspruchs 1 hervor. Gegenstand der vorliegenden Erfindung ist eine Membranbaugruppe für eine Druckmesseinrichtung zur Ermittlung eines Drucks in einem Brennraum einer Brennkraftmaschine, insbesondere einer selbstzündenden Brennkraftmaschine. Derartige Druckmesseinrichtungen sind bekannterweise entweder separat von einer Glühkerze in dem Brennraum vorgesehen, können aber auch in einer Glühkerze integriert vorgesehen sein. Dabei befindet sich ein Glühstift innerhalb einer in dem zu messenden Brennraum angeordneten Glühkerze bzw. Glühstiftkerze, der als Druckkraftübertragungselement wirkt, über das ein in der Brennkammer vorliegender Druck auf ein mit dem Glühstift in Wirkverbindung stehendes Drucksensormodul übertragen wird, welches sich dabei ebenfalls innerhalb der Glühkerze befindet oder mit dieser in Verbindung steht. Alternativ dazu kann auch ein den Glühstift führendes Stützrohr, auch Glührohr genannt, als Druckübertragungselement vorgesehen sein. Eine entsprechende Glühkerze, bei der sich das Drucksensormodul innerhalb der Glühkerze befindet, besteht dabei generell aus einem (evtl. in einem Glührohr geführten) Glühstift, der in einem Sensorgehäuse über eine Verbindungshülse in axialer Richtung beweglich gelagert ist, wobei sich das Sensorgehäuse wiederum in einem Dichtkonusgehäuse befindet, das als äußere Hülle der Glühkerze dient. Ausgehend von der Spitze bzw. Glühspitze des Glühstifts befindet sich hier das Sensormodul in der Glühkerze hinter dem axial beweglich gelagerten Glühstift und steht mit diesem in Wirkverbindung, so dass eine durch die Verbrennung erzeugte Druckkraft, die auf den Glühstift wirkt, durch diesen (oder das Glührohr) in dessen Funktion als Druckkraftübertragungselement auf das Sensormodul übertragen wird. Ein Hauptproblem dabei ist, dass die im Brennraum vorhandenen und in die Spitze der Glühkerze eindringenden Medien aufgrund ihrer Temperatur während der Verbrennung und aufgrund ihrer chemischen Eigenschaften das Sensormodul und die damit verbundene Elektronik zerstören können. Um dies zu verhindern, wurden in der Vergangenheit bereits Flammschutzmembranen entwickelt, wie sie unter anderem nachfolgend beschrieben sind.

In der DE 10 2006 057 627 A1 ist eine Druckmesseinrichtung beschrieben, die zur Anordnung im Brennraum einer selbstzündenden Brennkraftmaschine dient. Die darin beschriebene Druckmesseinrichtung liegt in Form einer Glühkerze vor und umfasst ein Gehäuse, ein Kraftübertragungselement in Form eines stabförmigen Heizelements, das an einer kammerseitigen Öffnung des Gehäuses teilweise aus dem Gehäuse ragt, und einen Drucksensor. Dieser ist in einem Innenraum des Gehäuses der Druckmesseinrichtung angeordnet und steht mit dem Kraftübertragungselement in Wirkverbindung. Ferner ist eine zylinderförmige Membran vorgesehen, die den Innenraum des Gehäuses, in dem der Drucksensor angeordnet ist, gegenüber der brennkammerseitigen Öffnung abdichtet. Die Membran, die als Metallmembran ausgebildet sein kann, weist einen Kraftübertragungsabschnitt auf, der in einer axialen Richtung des Kraftübertragungselementes orientiert ist. Der Drucksensor steht bei dieser Ausführung einer Druckmesseinrichtung über den Kraftübertragungsabschnitt der Membran mit dem Kraftübertragungselement in Wirkverbindung. Dadurch erfolgt zumindest eine teilweise Kompensation thermisch bedingter Längenänderungen der Membran, die beispielsweise durch heiße Brennstoffgase verursacht werden und zu periodischen Beeinträchtigungen der Druckmessung führen können.

Weiterhin ist aus der DE 10 2007 049 971 A1 eine Glühstiftkerze bekannt, die in einer Brennkammer einer selbstzündenden Brennkraftmaschine anzuordnen ist. Die Glühstiftkerze weist ein Gehäuse, ein Kraftübertragungselement in Form eines stabförmigen Heizelements, das teilweise aus dem Gehäuse ragt, und einen Drucksensor auf, der in einem Innenraum des Gehäuses der Glühkerze angeordnet ist. Dabei steht der Drucksensor einerseits mit dem stabförmigen Heizelement in Wirkverbindung, um eine aufgrund eines in der Kammer herrschenden Druckes bedingte Beaufschlagung des Heizelementes zum Bestimmen des in der Kammer herrschenden Druckes zu erfassen. Ferner stützt sich der Drucksensor andererseits an einem mit dem Gehäuse verbundenen Fixierelement ab. Eine Membran, hier speziell eine Federmembran dichtet den Innenraum des Gehäuses gegenüber der Brennkammer der Brennkraftmaschine ab. Dabei ist die Federmembran als im Schnitt S-förmige Federmembran ausgestaltet. Durch diese Ausgestaltung kann insbesondere eine druckausgeglichene Auslegung erreicht werden, so dass die Genauigkeit einer Druckmessung durch den Drucksensor verbessert werden kann.

Innerhalb eines Brennraumdrucksensors wird die Membran demzufolge generell dazu benötigt, den Innenraum der Glühstiftkerze bzw. der Druckmesseinrichtung gegenüber dem Brennraum abzudichten, um zu verhindern, dass die eindringenden Medien aufgrund ihrer Temperatur und ihrer aggressiven chemischen Eigenschaften die Bauteile des Sensormodules und der Elektronik binnen kürzester Zeit zerstören. Gleichzeitig sollte die Membran aber auch die Belastungen während des Sensorbetriebes über eine möglichst lange Lebensdauer aushalten, zu denen im Wesentlichen die zyklischen Belastungen des Druckwechsels (mehrere hundert Millionen Lastwechsel pro Lebensdauer) sowie das hohe Niveau der Durchschnittstemperatur zu zählen sind. Darüber hinaus muss eine sich verändernde Empfindlichkeit der Druckmesseinrichtung und daraus entstehende Messfehler verhindert werden (sog. "Kalibrierfaktor"-Effekt), die aus Änderungen der mittleren Temperatur an der Membran, beispielsweise durch unterschiedliche Motorlastzustände, entsteht. Weiterhin müssen ebenfalls zu Messfehlern führende Kurzzeiteffekte innerhalb eines Lastspiels verhindert werden, wie z.B. der sog. "Thermoschock"-Effekt, bei dem schnelle, schockartige Veränderungen der Temperatur an der Membran zu mechanischen Spannungen zwischen dem äußeren und inneren Teil des Membranmaterials führen, da die Wärme zur oder von der Oberfläche schneller übertragen bzw. abgeführt wird als zum Inneren.

DE2544505 A bezieht sich auf eine Membrananordnung für einen Druckaufnehmer, insbesondere zur Überwachung von Brennkraftmaschinen. Die Membranmontagefläche wie auch die Membrandruckübertragungsfläche liegen in einer planbar bearbeitbaren Ebene. Diese passt auf die ebenfalls in einer Ebene liegenden Aufnehmergegenflächen; ferner umfasst die Membrananordnung einen Außenring und einen Innenring zwischen denen die Membran angeordnet ist. Diese ist durch elastische Mittel einstückig mit den Ringen derart verbunden, dass diese als Träger einer brückenähnlichen Verbindung gestaltet sind, wobei die kraftflüssige Abstützung des Innenrings auf der Kraftmesszelle durch eine Schraubenvorspannung einstellbar ist.

US5,325,720 A bezieht sich auf ein Verfahren zur Herstellung eines Drucksensors und ein gemäß dieses Verfahrens hergestellten Drucksensor. Gemäß dieser Lösung wird ein Sensor zur Messung eines Drucks mit einem tassenförmig gestreckten Membranelement vorgeschlagen. Zunächst wird ein metallisches Material auf die Membran und umgebende Bereiche aufgebracht. Anschließend wird eine Seitenwand des Drucksensors mit dem abgeschiedenen Material auf eine bestimmte Größe hin gefertigt. Schließlich wird das abgeschiedene Material von der Oberseite der Membran in kleinen Schritten entfernt.

GB 936 934 A bezieht sich auf einen Flüssigkeit/Druck-Überträger. Dieser dient zur Ermittlung des Drucks in einer Flüssigkeit.

DE 21 56 959 A bezieht sich auf einen Dehnstreif-Messwandler, insbesondere einen Druckmesswandler, mit in einem Gehäuse angeordnetem über einen Druckstempel von der Messkraft belasteten Dehnkörper, der an seiner Mantelflächen Dehnmessstreifen trägt. Das Gehäuse enthält einen zur Wandlerfühlfläche hin abgedichteten Kühlflüssigkeitsraum, in den eine mit der Gehäuseinnenwand einen Ringraum bildende gehäusefeste Stützhülse ragt, in die eine zur Wandlerfühlfläche hin offene, innen von Kühlmitteln gespülte Hülse eingesetzt ist. Diese bildet den Dehnkörper des Wandlers, an deren Bodenteil stützt sich der Druckstempel ab. EP 0 226 742 A2 bezieht sich auf einen Druckaufnehmer für Druckmessungen unter hohen Temperaturen. Bei einem Druckaufnehmer für Druckmessungen unter hohen Temperaturen, insbesondere für den Brennrauminnendruck in Brennkraftmaschinen, bei denen der in dem Brennraum herrschende Druck durch die Verformung eines piezoelektrischen Elements gemessen wird, ist das piezoelektrische Element derart angeordnet, dass der im Brennraum herrschende Druck auf das piezoelektrische Element eine Schubspannung ausübt.

US 2010/0147822 A1 bezieht sich auf eine Glühkerze mit einem Druckmesselement. Der Drucksensor ist innerhalb eines kanisterförmigen Gehäuses aufgenommen, welches eine Kapselung bildet und die mit der Glühkerze innerhalb eines Sitzbereichs fest verbunden ist.

WO 2009/146565 A1 bezieht sich auf einen Drucksensor für Messungen in einer Kammer einer Brennkraftmaschine. Der Drucksensor umfasst ein Gehäuse, ein Druckelement für die Aufnahme eines Drucks sowie ein in Druckrichtung hinter dem Druckelement angeordnetes Messelement mit einem Sensorelement und einer Membran. Die Membran ist an ihrem ersten Ende fest mit dem Druckelement und an ihrem zweiten Ende direkt oder indirekt fest mit dem Gehäuse an einer Verbindung verbunden, wobei sich das Druckelement über die Membranen am Messelement abstützt.

DE 3727221 A1 bezieht sich auf einen Sensor zur Ermittlung einer Druckkraft. Der Sensor wird insbesondere für Verbrennungsdruckmessungen im Kolbenmotor eingesetzt und umfasst ein piezoelektrisches Röhrchen, welches vorzugsweise aus Piezo-Keramik hergestellt ist. Dieses liefert eine Signalspannung entsprechend eines transversal verlaufenden Piezoeffekts.

US 2004 231 425 A1 bezieht sich auf einen Drucksensor, dessen Ausgabefehler auch bei hohen Temperaturen reduziert bleibt. Der Drucksensor umfasst ein Gehäuse, ein Diaphragma, welches ein Inneres und ein Äußeres des Gehäuses teilt sowie ein Sensorelement, welches innerhalb des Gehäuses angeordnet ist. Der Ausgangswert des Sensorelements variiert entsprechend der auf dieses ausgeübten Kraft, wobei eine Kraftübertragungsstange innerhalb des Gehäuses vorgesehen ist, die sich abwärts bewegt, wenn ein Druck auf das Diaphragma ausgeübt wird.

### Offenbarung der Erfindung

Die erfindungsgemäße Membranbaugruppe mit den Merkmalen des unabhängigen Anspruchs 1 hat demgegenüber den Vorteil, dass der Sensorinnenraum ausreichend abgedichtet werden kann, wobei eine zufriedenstellende Lastwechselsteifigkeit einer federelastischen Membran sowie eine ausreichend biegeschlaffe Ausführung der Membran umgesetzt werden können. Genauer gesagt wird dieser Vorteil durch eine Membranbaugruppe für eine Druckmesseinrichtung zur Ermittlung eines Drucks in einem Brennraum einer Brennkraftmaschine, insbesondere einer selbstzündenden Brennkraftmaschine erreicht, wobei die Membranbaugruppe in einem Gehäuse der Druckmesseinrichtung aufgenommen ist, genauer gesagt innerhalb eines Dichtkonusgehäuses einer in dem Brennraum angeordneten Glühkerze. Auf diese Weise wird ein sog. Druckraum innerhalb der Glühkerze, der mit dem Brennraum in Fluidverbindung steht und demnach mit dem Verbrennungsdruck innerhalb der Brennkammer beaufschlagt wird, von einem Hohlraum innerhalb der Glühkerze getrennt. Der Hohlraum und damit ein Teil des Gehäuses werden damit gegen den zu messenden Verbrennungsdruck abgedichtet. Die Membranbaugruppe weist dazu eine federelastische Membran, die einen druckbeaufschlagten Bereich umfasst, auf den der in dem Brennraum vorherrschende Druck während des Betriebs der Brennkraftmaschine hauptsächlich wirkt, sowie zumindest ein Auflagebauteil auf an dem sich die federelastische Membran mit einer Innenseite des druckbeaufschlagten Bereichs zumindest teilweise abstützt.

Laut Erfindung ist die Membran der Membranbaugruppe ringförmig ausgebildet und weist im Querschnitt eine zum Hohlraum hin offene U-Form auf. Damit wird bereits mit der speziellen Querschnittsform der Membran eine geometrische Stabilität gegen den von außen wirkenden Druck erreicht und die Membran kann generell weicher aufgebaut werden.

Laut Erfindung, ist der druckbeaufschlagte Bereich der Membran hohlraumseitig zusätzlich zu dem radial äußeren Auflagebauteil durch ein radial inneres Auflagebauteil als weiteres Bauteil der Membranbaugruppe abgestützt, das mit der Innenseite des druckbeaufschlagten Bereichs in Auflagekontakt, genauer gesagt in flächigem Auflagekontakt steht. Eine derartige Anordnung der Membranbaugruppe hat den Vorteil, dass der druckbeaufschlagte Bereich bis auf einen vorzugsweise geringen Spalt zwischen dem radial inneren und dem radial äußeren Auflagebauteil flächig abgestützt wird, so dass zusätzlich zu der Stabilität durch die U-Form der Membran auch noch beide Auflagebauteile eine zusätzliche Stabilität gegen die Druckbeaufschlagung von Seiten der Brennkammer bzw. von Seiten des Druckraums bieten.

Durch die in den abhängigen Ansprüchen aufgeführten Maßnahmen sind vorteilhafte Weiterbildungen und Verbesserungen der im unabhängigen Anspruch angegebenen Membranbaugruppe möglich. In einer bevorzugten Ausführung der Membranbaugruppe ist der radial äußere Schenkel der U-Form der Membran kürzer als der radial innere Schenkel der U-Form ausgebildet, wodurch sich eine bessere Führung des Glühstifts durch die Membran sowie eine leichtere Zugänglichkeit zu den Befestigungsbereichen bzw. den zu verschweißenden Bereichen zwischen dem Glühstift und der Membran ergibt.

Die Auflagebauteile können vorzugsweise ringförmig ausgebildet sein, wobei die Querschnitte der beiden Auflagebauteile eine annähernd rechteckige Form haben können. Dabei kann das radial innere Auflagebauteil in flächigem Kontakt sowohl mit der Innenseite des radial inneren Schenkels der U-Form der Membran als auch mit der Innenseite des druckbeaufschlagten Bereichs der Membran stehen. Das bedeutet, dass eine Stirnseite des radial inneren Auflagebauteils flächig auf der Innenseite der Membran, also auf der Innenseite des Bodens der U-Form der Membran aufliegt und zudem mit seiner einen Seitenfläche, genauer gesagt seiner radialen Innenseite mit der Innenseite des radial inneren Schenkels der U-Form der Membran flächig in Kontakt steht, vorzugsweise ohne einen Spalt zwischen innerem Auflagebauteil und Membran auszubilden. Entsprechend dazu kann das radial äußere Auflagebauteil in flächigem Kontakt sowohl mit der Innenseite des radial äußeren Schenkels der U-Form der Membran als auch mit der Innenseite des druckbeaufschlagten Bereichs der Membran stehen. Das bedeutet, dass eine Stirnseite des radial äußeren Auflagebauteils flächig auf der Innenseite der Membran, also auf der Innenseite des Bodens der U-Form der Membran aufliegt und zudem mit seiner einen Seitenfläche, also seiner radialen Außenseite mit der Innenseite des radial äußeren Schenkels der U-Form der Membran flächig in Kontakt steht, vorzugsweise ohne einen Spalt zwischen äußerem Auflagebauteil und Membran auszubilden. Vorteilhaft bei einer derartigen Anordnung der einzelnen Bauteile der Membranbaugruppe ist, dass eine Abstützung der Membran immer über einen flächigen Kontaktbereich ausgeführt ist und dass lediglich der an dem Spalt angeordnete Teil des druckbeaufschlagten Bereichs einer stärkeren Verformung durch auf die Membran wirkende Drücke ausgesetzt ist. Eine Verformung der Membran kann dadurch auf ein Minimum reduziert werden.

In einer weiteren bevorzugten Ausführung der Erfindung weist der Querschnitt des Endes des radial äußeren Auflagebauteils, das mit der Innenseite des druckbeaufschlagten Bereichs in flächigem Kontakt steht, eine L-Form auf, also das mit dem druckbeaufschlagten Bereich der Membran in Flächenkontakt stehende Ende des radial äußeren Bauteils. Vorzugsweise weist dabei das L-förmige Ende des radial äußeren Auflagebauteils federnde Eigenschaften auf, wodurch dieses biegeweich bzw. federnd ausgebildet ist. Durch eine derartige federnde Ausführung des entsprechenden Endes des radial äußeren Auflagebauteils können die durch eine Verformung der Membran in axialer Richtung erzeugten Spannungen in der Membran verringert bzw. abgefedert werden, wodurch die Membran in die Lage versetzt wird, die Belastungen während des Sensorbetriebes besser aushalten, zu denen im Wesentlichen die zyklischen Belastungen des Druckwechsels gehören, also mehrere hundert Millionen Lastwechsel pro Lebensdauer der Druckmesseinrichtung. Dabei kann das radial äußere Auflagebauteil durch einen Endabschnitt eines Sensorgehäuses der Druckmesseinrichtung ausgebildet sein, d.h. dass ein Endabschnitt des Sensorgehäuses, das u.a. das Sensormodul enthält und in der Glühkerze angeordnet ist, als das radial äußere Auflagebauteil wirkt und dementsprechend ausgebildet ist. Damit kann vorteilhafterweise die Bauteilanzahl innerhalb der Glühkerze verringert und ein Zusammenbau der Glühkerze vereinfacht werden.

Weiter vorzugsweise kann die Membran fest mit dem radial inneren Auflagebauteil verbunden sein, also z.B. durch Schweißen oder dergleichen an das radial innere Auflagebauteil geschweißt sein, wobei es denkbar ist, dass das radial innere Auflagebauteil über die Membran mit dem Glühstift der Glühkerze durch Schweißen oder dergleichen fest verbunden ist. Alternativ dazu kann das radial innere Auflagebauteil auch einstückig mit der Membran ausgebildet sein, also ein Teil der Membran sein, wobei beispielsweise der radial innere Schenkel der Membran mit einer großen Wandstärke ausgebildet ist, oder aber ein Bauteil sein, dass durch Urformen oder ähnliches an der Membran angebracht ist, um das einstückig ausgebildete radial innere Auflagebauteil auszubilden.

Als weitere bevorzugte Ausführung ist die Membran der Membranbaugruppe fest mit dem radial äußeren Auflagebauteil verbunden, also z.B. durch (Plasma-)Schweißen oder dergleichen an das radial äußere Auflagebauteil geschweißt sein, wobei weiter vorzugsweise die Membran über das radial äußere Auflagebauteil mit dem Gehäuse der Druckmesseinrichtung verbunden sein kann. Dadurch kann eine vorteilhafte Befestigung der Membran an dem radial äußeren Auflagebauteil bzw. an der Gehäuse der Druckmesseinrichtung erreicht werden, so dass eine optimale Krafteinleitung überflüssiger Druckkraft in andere Bauteile als die Membran erzielt wird, um die Belastung der Membran zu verringern. Die Membran kann vorteilhafterweise ein tiefgezogenes Bauteil sein, wodurch eine Herstellung der Membran auf einfache und billige Weise im Vergleich zu den Membranen des Stands der Technik erzielt wird. Weiterhin kann die Membran als eine Flammschutzmembran, vorzugsweise als eine Metallmembran ausgebildet sein, womit eine Lastwechselsteifigkeit der Membran sichergestellt werden kann.

### Kurze Beschreibung der Zeichnungen

Ausführungsformen der Erfindung sind in den Zeichnungen schematisch dargestellt und in der nachfolgenden Beschreibung der bevorzugten Ausführungsformen näher erläutert.

Es zeigen:
Fig. 1 eine Schnittabbildung eines Ausschnitts einer Glühkerze mit einer Membranbaugruppe gemäß der ersten bevorzugten Ausführungsform der Erfindung;
Fig. 2 eine geschnittene Einzelabbildung der Membran der in Fig. 1 gezeigten Membranbaugruppe;
Fig. 3a eine vergrößerte Abbildung der Verformung der in Fig. 2 gezeigten Membran, speziell des druckbeaufschlagten Bereiches der Membran, bei einer Verwendung, die nicht Teil der Erfindung ist, der Membrananordnung der ersten bevorzugten Ausführungsform ohne Auflagebauteile, und
Fig. 3b eine vergrößerte Abbildung der Verformung der in Fig. 2 gezeigten Membran bei einer Verwendung der Membrananordnung der ersten bevorzugten Ausführungsform mit Auflagebauteilen; und
Fig. 4 eine Detailabbildung einer Membrananordnung gemäß einer zweiten bevorzugten Ausführungsform der Erfindung.

### Ausführungsformen der Erfindung

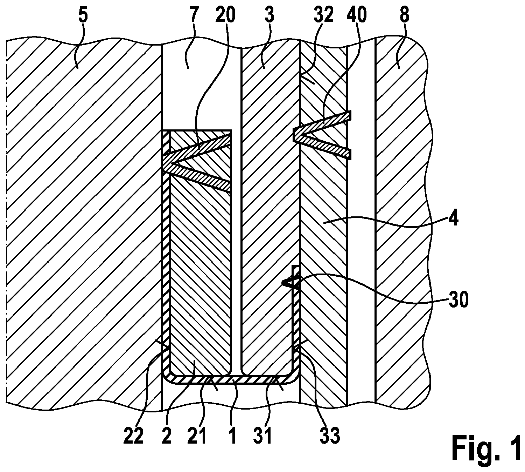

Fig. 1 zeigt eine geschnittene Detailansicht einer erfindungsgemäßen Membrananordnung gemäß einer ersten bevorzugten Ausführungsform in einer Glühkerze mit schematisch angedeuteten Schweißnähten 20, 30 und 40. Eine federelastische Membran 1 der Membrananordnung ist dabei zwischen einem Glühkerzengehäuse oder Glühkerzendichtkonusgehäuse 4 und einem Glühstift 5 angeordnet, wobei die Glühkerze innerhalb eines Zylinderkopfs 8 einer selbstzündenden Brennkraftmaschine angeordnet ist. Anstelle des Glühstiftes 5 ist es auch denkbar, dass ein Stützrohr des Glühstifts bzw. ein Glührohr vorgesehen ist und mit der Membran 1 in Verbindung steht. Es wäre aber auch jedes andere zylindrische Kraftübertragungselement denkbar, wie z.B. ein einfacher zylindrischer Metallstift oder dergleichen, wobei es sich in diesem Fall nicht mehr um eine Glühkerze sondern alternativ dazu um eine reine Druckmesseinrichtung handeln würde.

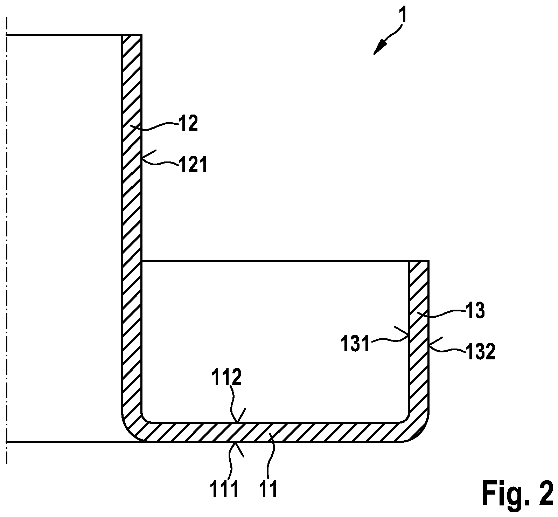

Die Membran 1 ist ringförmig ausgebildet und befindet sich auf ihrer radial inneren Seite mit dem Glühstift 5 in Anlage und auf ihrer radial äußeren Seite mit dem Dichtkonusgehäuse 4 in Anlage. Wie es in Fig. 1 zu sehen ist, weist die Membran 1 im Schnitt eine U-Form auf, wobei ein inneres Auflagebauteil 2 und ein äußeres Auflagebauteil 3 innerhalb der U-Form der Membran 1 angeordnet sind. Wie es in Fig. 2 zu sehen ist, umfasst die U-Form der Membran 1 einen Bodenabschnitt 11, der den druckbeaufschlagten Bereich 11 der Membran 1 darstellt, welcher sich in dieser Ausführungsform von der Schweißnaht 20 bis zu dem äußeren Auflagebauteil 3 erstreckt. Der druckbeaufschlagte Bereich 11 hat eine Außenseite bzw. Unterseite 111, die im Betrieb der Glühkerze zu einem im Inneren der Glühkerze angeordneten Druckraum 6 hin freiliegt, welcher mit dem Brennraum (nicht gezeigt) eines Zylinders der Brennkraftmaschine in Fluidverbindung steht, wodurch die Außenseite bzw. Unterseite 111 der Membran 1 mit dem Verbrennungsdruck eines jeden Verbrennungszykluses innerhalb des Zylinders beaufschlagt wird. Weiterhin weist der druckbeaufschlagte Bereich 11 eine Innenseite bzw. Oberseite 112 auf, die zu dem Inneren der U-Form der Membran 1 hin angeordnet ist. Ferner weist die U-Form der Membran 1 einen radial innen angeordneten langen Schenkel 12 auf, der eine innerhalb der U-Form angeordnete Innenfläche 121 hat, und einen radial außen angeordneten kurzen Schenkel 13 auf, der eine innerhalb der U-Form angeordnete Innenfläche 131 hat. Die Wandstärke der Membran 1 beträgt in etwa 0,1mm bei dieser Ausführungsform, wodurch eine geringe Steifigkeit der Membran 1 erreicht wird.

Gemäß Fig. 1 befindet sich das innere Auflagebauteil 2 dabei an der radial inneren Seite der U-Form der Membran 1 und steht mit der Innenfläche 121 der U-Form auf der radial inneren Seite über die Seitenfläche 22 in Anlagekontakt. Das äußere Auflagebauteil 3 befindet sich an der radial äußeren Seite der U-Form der Membran 1 und eine Außenseitenfläche einer Aussparung 33 in dem äußeren Anlagebauteil 3 steht mit der Innenfläche 131 der U-Form auf der radial äußeren Seite in Anlagekontakt. In dieser Ausführungsform ist in der Aussparung 33 dabei der kürzere Schenkel 13 der Membran 1 vollständig aufgenommen, so dass eine Außenseite bzw. Außenfläche 132 des kürzeren Schenkels 13 der Membran 1 mit der Seitenfläche 32 eine durchgehende Fläche ausbildet, die wiederum mit einer Innenseite des Gehäuses 4 in Anlagenkontakt steht. Alternativ dazu kann die Aussparung 33 weggelassen werden, wodurch die Innenfläche 131 des kurzen Schenkels 13 der U-Form der Membran 1 direkt mit der Seitenfläche 32 in Anlagekontakt steht.

Zwischen dem inneren Auflagebauteil 2 und dem äußeren Auflagebauteil 3 besteht in dieser Ausführungsform ein Spalt 18, der mit einem innerhalb der Glühkerze angeordneten Hohlraum 7 in Verbindung steht. Das innere Auflagebauteil 2 weist zudem an dessen unterer Stirnseite eine Auflagefläche 21 auf, die mit der Oberseite 112 des druckbeaufschlagten Bereichs 11 in Anlagekontakt steht und die zum Spalt 18 hin mit einem ersten Radius 211 abgerundet ist. Das äußere Auflagebauteil 3 weist ebenfalls an dessen unterer Stirnseite eine Auflagefläche 31 auf, die mit der Oberseite 112 des druckbeaufschlagten Bereichs 11 in Anlagekontakt steht und die zum Spalt 18 hin mit einem zweiten Radius 311 abgerundet ist. Die fluidundurchlässige Membran 1 bzw. der druckbeaufschlagte Bereich 11 der Membran 1 dichtet zwischen dem Druckraum 6 und dem Hohlraum 7 fluiddicht ab, um ein Eindringen der Brenngase aus dem Brennraum in den Hohlraum 7 der Glühkerze zu vermeiden, so dass die Druckmesseinrichtung (nicht gezeigt), die in dem Hohlraum 7 angeordnet ist, vor diesen geschützt wird. Wie es weiterhin in Fig. 1 zu sehen ist, ist das innere Auflagebauteil 2 über den langen Schenkel 12 der Membran 1 mit dem Glühstift 5 durch eine schematisch angezeigte Schweißnaht verbunden, die z.B. durch Plasmaschweißen oder dergleichen erzeugt wird. Dadurch wird der Glühstift 5 durch die Membran 1 geführt und ein evtl. vorliegender Spalt zwischen dem Glühstift 5 und der Membran 1 geschlossen. Demgegenüber ist der kurze Schenkel 13 der Membran 1 im Bereich der Aussparung 33 mit dem äußeren Auflagebauteil 3 durch eine Schweißnaht verbunden. Um die Membrananordnung mit dem Gehäuse 4 zu verbinden und einen evtl. vorliegenden Spalt zwischen Gehäuse 4 und äußerem Auflagebauteil 3 zu schließen, ist das Gehäuse 4 mit dem äußeren Bauteil 3 verschweißt. Dadurch wird sichergestellt, dass zum einen der Glühstift 1 sicher geführt wird und zum anderen, dass der Hohlraum 7 fluiddicht von dem Druckraum 6 abgeschlossen ist.

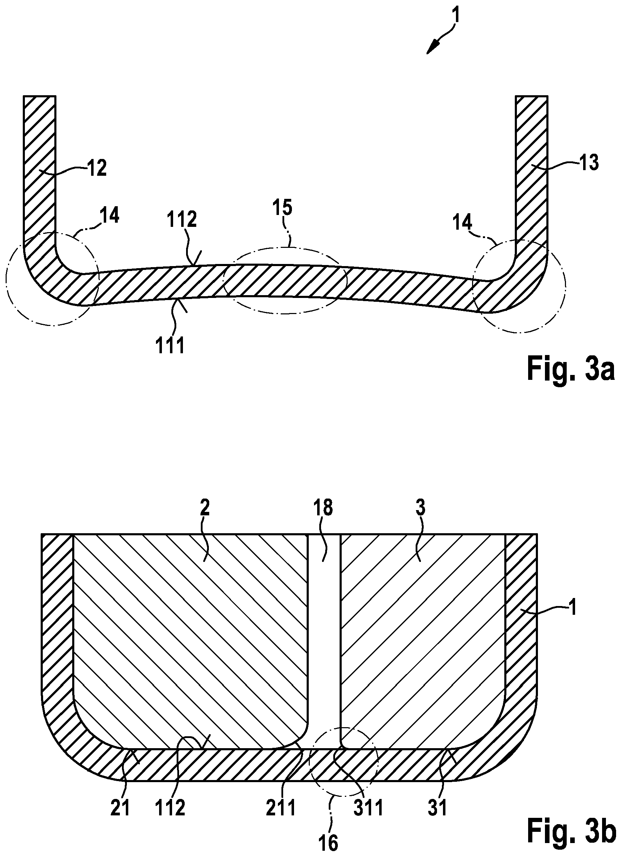

In Fig. 3a ist die Membran 1 bei einer Verwendung (die nicht teil der Erfindung ist) ohne Auflagebauteile 2 und 3 bzw. einer Verwendung mit deaktivierter Auflage dargestellt, wobei die Membran 1 durch einen im Brennraum (von unten) wirkenden Verbrennungsdruck beaufschlagt ist. Die Bereiche 14 zwischen den beiden Schenkeln 12 und 13 erfahren dabei in Simulationen eine Stresslast von ∼2200 MPa, wobei die Innenseite der Bereiche 14 am stärksten belastet wird. Der Bereich 15 erfährt auf der Unterseite 111 eine Stresslast von ∼1300 MPa und auf der Oberseite 112 eine Stresslast von ∼1000 MPa.

In Fig. 3b ist die Membran 1 bei einer Verwendung mit Auflagebauteile 2 und 3 bzw. einer Verwendung mit aktivierter Auflage dargestellt, wobei die Membran 1 ähnlich wie in Fig. 3a durch einen im Brennraum (von unten) wirkenden Verbrennungsdruck beaufschlagt ist. Einzig der Bereich 16 am inneren Auflagepunkt des äußeren Auflagebauteils 3 erfährt dabei in Simulationen eine maximale Stresslast von ∼900 MPa, wobei die Innenseite des Bereichs 16 auf der Oberseite 112 am stärksten belastet wird. Daraus ist erkennbar, dass durch Verwendung der Auflagebauteile 2 und 3 eine Belastung der Membran 1 wesentlich verringert und damit deren Lebensdauer deutlich erhöht werden kann.

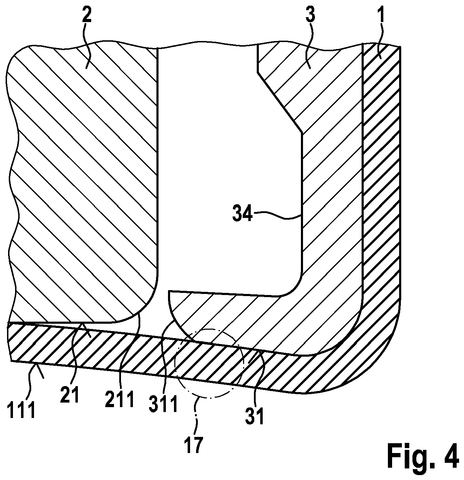

Fig. 4 zeigt eine Membrananordnung gemäß einer zweiten bevorzugten Ausführungsform. Dabei ist der generelle Aufbau der Membrananordnung ähnlich zu dem in Fig. 1 gezeigten Aufbau. Einziger Unterschied ist dabei die L-förmige Ausführung des unteren Endes des äußeren Auflagebauteils 3, also des Endes des äußeren Auflagebauteils 3, an dem die Auflagefläche 31 mit dem zweiten Radius 311 ausgebildet ist, welche mit der Innenseite der Membran 1 in Anlagekontakt steht. Bei dieser geometrisch optimierten Auflagefläche des äußeren Bauteils 3 ist das entsprechende Ende des äußeren Auflagebauteils 3 mit einer Aussparung 34 versehen, wodurch das Auflageende des äußeren Auflagebauteils 3 eine radial nach innen gerichtete L-Form erhält. Durch diese Ausgestaltung des äußeren Auflagebauteils 3 weist das Auflageende speziell in dem in Fig. 3b gezeigten Bereich 16 eine federnde Eigenschaft im Sinne einer Blattfeder durch den mit der Oberseite 112 des druckbeaufschlagten Bereichs 11 in Kontakt stehenden Schenkels der L-Form auf. Diese federnde Eigenschaft des äußeren Auflagebauteils 3 bewirkt in Versuchen, dass nur mehr im Bereich 17, genauer gesagt nur an der Unterseite 111 des druckbeaufschlagten Bereichs 11 im Bereich 17 eine maximale Stresslast von 460 MPa auftritt. Dadurch kann die Belastung an der Membran 1, die durch einen Verbrennungsdruck in der Brennkammer verursacht wird, noch weiter verringert werden und damit die Lebensdauer der Membran 1 weiter deutlich erhöht werden. Dadurch wird weiterhin ein gutes Abstützen des druckbeaufschlagten Bereichs 11 der Membran 1 erzielt, wobei das Abstützen weicher und besser verteilt erfolgt, wodurch die im Bereich des Spalts zwischen dem inneren Auflagebauteil 2 und dem äußeren Auflagebauteil 3 auftretenden Spannungen besser verteilt werden können. Damit kann ein Knicken der Membran 1 an den Auflagepunkten der Membran 1 an den Auflageflächen, insbesondere an der Auflagefläche des äußeren Auflagebauteils 3 verhindert werden. In einer weiteren Ausführung ist es denkbar, eine entsprechende L-Form des Auflageendes des inneren Auflagebauteils 2 vorzusehen, um eine weitere Federung des druckbeaufschlagten Bereichs 11 der Membran 1 zu erreichen.

## Patentansprüche

1. Membranbaugruppe für eine Druckmesseinrichtung zur Ermittlung eines Drucks in einem Brennraum einer Brennkraftmaschine, insbesondere einer selbstzündenden Brennkraftmaschine, wobei die Membranbaugruppe eine federelastische Membran (1) aufweist und in einem Gehäuse (4) der Druckmesseinrichtung aufgenommen ist, um einen Druckraum von einem Hohlraum (7) zu trennen und das Gehäuse (4) gegen den zu messenden Druck abzudichten, und die federelastische Membran (1) auf ihrer Innenseite mit einem zylindrischen Kraftübertragungselement (5), insbesondere eine Glühkerze in Anlage und auf ihrer radial äußeren Seite mit dem Gehäuse (4) in Anlage steht und wobei die federelastische Membran (1) einen druckbeaufschlagten Bereich (11) umfasst, wobei zumindest ein Auflagebauteil (2, 3) vorgesehen ist, an dem sich die federelastische Membran (1) mit einer Innenseite (112) des druckbeaufschlagten Bereichs (11) zumindest teilweise abstützt, ein äußeres Auflagebauteil (3) mit einer äußeren Auflagefläche (31) und ein inneres Auflagebauteil (2) mit einer inneren Auflagefläche (21) vorgesehen sind, zwischen denen zum Hohlraum (7) hin ein Spalt (18) ausgebildet ist, und wobei der Spalt (18) vom druckbeaufschlagten Bereich (11) der Membran (1) überbrückt ist, derart, dass eine federelastische Verformung der Membran (1) in axialer Richtung realisierbar ist, **dadurch gekennzeichnet, dass** die Membran (1) ringförmig ausgebildet ist und im Querschnitt eine zum Hohlraum (7) hin offene U-Form aufweist und das innere Auflagebauteil (2) und das äußere Auflagebauteil (3) innerhalb der U-Form der federelastischen Membran (1) angeordnet sind.

2. Membranbaugruppe nach Anspruch 1, **dadurch gekennzeichnet, dass** an der inneren Auflagefläche (21) ein erster Radius (211) und an der äußeren Auflagefläche (31) ein zweiter Radius (311) ausgebildet sind.

3. Membranbaugruppe nach einem der vorangehenden Ansprüche, **dadurch gekennzeichnet, dass** der Querschnitt des mit der Innenseite (112) des druckbeaufschlagten Bereichs (11) in flächigem Kontakt stehenden Endes des radial äußeren Auflagebauteils (3) eine L- Form aufweist.

4. Membranbaugruppe nach Anspruch 3, **dadurch gekennzeichnet, dass** die mit der Innenseite (112) des druckbeaufschlagten Bereichs (11) in flächigem Kontakt stehende äußere Auflagefläche (31) federnde Eigenschaften aufweist, um Spannungen in der federelastischen Membran (1) zu verringern.

5. Membranbaugruppe nach einem der vorangehenden Ansprüche, **dadurch gekennzeichnet, dass** das radial äußere Auflagebauteil (3) durch einen Endabschnitt eines Sensorgehäuses der Druckmesseinrichtung ausgebildet ist.

6. Membranbaugruppe nach einem der vorgehergehenden Ansprüche, **dadurch gekennzeichnet, dass** die Auflagebauteile (2, 3) ringförmig ausgebildet sind und das radial innere Auflagebauteil (2) in flächigem Kontakt sowohl mit einer Innenfläche (121) des radial inneren langen Schenkels (12) der U-Form als auch mit der Innenseite (112) des druckbeaufschlagten Bereichs (11) steht und das radial äußere Auflagebauteil (3) in flächigem Kontakt sowohl mit einer Innenfläche (131) des radial äußeren Schenkels (13) als auch mit der Innenseite (112) des druckbeaufschlagten Bereichs (11) steht.

7. Membranbaugruppe nach Anspruch 6, **dadurch gekennzeichnet, dass** die federelastische Membran (1) fest mit dem radial inneren Auflagebauteil (2) verbunden ist oder einstückig mit diesem ausgebildet ist.

8. Membranbaugruppe nach Anspruch 6, **dadurch gekennzeichnet, dass** die federelastische Membran (1) fest mit dem radial äußeren Auflagebauteil (3) verbunden ist, und wobei vorzugsweise die federelastische Membran (1) über das radial äußere Auflagebauteil (3) mit dem Gehäuse (4) der Druckmesseinrichtung verbunden ist.

9. Membranbaugruppe nach einem der vorangehenden Ansprüche, **dadurch gekennzeichnet, dass** die federelastische Membran (1) ein tiefgezogenes Bauteil ist.

## Claims

1. Membrane assembly for a pressure measuring device for determining a pressure in a combustion chamber of an internal combustion engine, in particular of a self-igniting internal combustion engine, the membrane assembly having a resilient membrane (1) and being accommodated in a housing (4) of the pressure measuring device, in order to divide a pressure chamber from a hollow space (7) and to seal off the housing (4) with respect to the pressure to be measured, and the resilient membrane (1) being in contact on its inner side with a cylindrical force transmission element (5), in particular a spark plug, and being in contact on its radially outer side with the housing (4), and the resilient membrane (1) comprising a pressure-loaded area (11), at least one support component (2, 3) being provided, on which the resilient membrane (1) is at least partly supported by an inner side (112) of the pressure-loaded area (11), an outer support component (3) having an outer support surface (31) and an inner support component (2) having an inner support surface (21) being provided, between which a gap (18) towards the hollow space (7) is formed, and the gap (18) being bridged by the pressure-loaded area (11) of the membrane (1), in such a way that resilient deformation of the membrane (1) in the axial direction can be implemented, **characterized in that** the membrane (1) is annular and, in the cross section, has a U-shape that is open towards the hollow space (7), and the inner support component (2) and the outer support component (3) are arranged within the U-shape of the resilient membrane (1).

2. Membrane assembly according to Claim 1, **characterized in that** a first radius (211) is formed on the inner support surface (21), and a second radius (311) is formed on the outer support surface (31).

3. Membrane assembly according to one of the preceding claims, **characterized in that** the cross section of that end of the radially outer support component (3) which is in flat contact with the inner side (112) of the pressure-loaded area (11) has an L-shape.

4. Membrane assembly according to Claim 3, **characterized in that** the outer support surface (31) which is in flat contact with the inner side (112) of the pressure-loaded area (11) has springy properties, in order to reduce stresses in the resilient membrane (1).

5. Membrane assembly according to one of the preceding claims, **characterized in that** the radially outer support component (3) is formed by an end section of a sensor housing of the pressure measuring device.

6. Membrane assembly according to one of the preceding claims, **characterized in that** the support components (2, 3) are annular, and the radially inner support component (2) is in flat contact both with the inner surface (121) of the radially inner long leg (12) of the U-shape and with the inner side (112) of the pressure-loaded area (11), and the radially outer support component (3) is in flat contact both with an inner surface (131) of the radially outer leg (13) and with an inner side (112) of the pressure-loaded area (11).

7. Membrane assembly according to Claim 6, **characterized in that** the resilient membrane (1) is firmly connected to the radially inner support component (2) or is formed in one piece with the latter.

8. Membrane assembly according to Claim 6, **characterized in that** the resilient membrane (1) is firmly connected to the radially outer support component (3), and the resilient membrane (1) being preferably connected to the housing (4) of the pressure measuring device via the radially outer support component (3).

9. Membrane assembly according to one of the preceding claims, **characterized in that** the resilient membrane (1) is a deep-drawn component.

## Revendications

1. Ensemble membrane pour un dispositif de mesure de pression pour déterminer une pression dans une chambre de combustion d'un moteur à combustion interne, en particulier d'un moteur à combustion interne à auto-allumage, l'ensemble membrane présentant une membrane élastique à ressort (1) et étant reçu dans un boîtier (4) du dispositif de mesure de pression afin de séparer un espace de pression d'une cavité (7), et d'étanchéifier le boîtier (4) vis-à-vis de la pression à mesurer, et la membrane élastique à ressort (1) étant en appui, sur son côté intérieur, avec un élément de transfert de force cylindrique (5), en particulier une bougie d'allumage et, sur son côté radialement extérieur, avec le boîtier (4), et la membrane élastique à ressort (1) comprenant une région sollicitée par pression (11), au moins un composant d'appui (2, 3) étant prévu, contre lequel la membrane élastique à ressort (1) s'appuie au moins en partie avec un côté intérieur (112) de la région sollicitée par pression (11), un composant d'appui extérieur (3) avec une surface d'appui extérieure (31) et un composant d'appui intérieur (2) avec une surface d'appui intérieure (21) étant prévus, entre lesquels une fente (18) est réalisée vers la cavité (7) et la fente (18) étant surmontée par la région sollicitée par pression (11) de la membrane (1) de telle sorte qu'une déformation élastique à ressort de la membrane (1) dans la direction axiale puisse être réalisée, **caractérisé en ce que** la membrane (1) est réalisée sous forme annulaire et présente en section transversale une forme en U ouverte vers la cavité (7) et le composant d'appui intérieur (2) et le composant d'appui extérieur (3) sont disposés à l'intérieur de la forme en U de la membrane élastique à ressort (1).

2. Ensemble membrane selon la revendication 1, **caractérisé en ce qu'**un premier rayon (211) est réalisé sur la surface d'appui intérieure (21) et un deuxième rayon (311) est réalisé sur la surface d'appui extérieure (31).

3. Ensemble membrane selon l'une quelconque des revendications précédentes, **caractérisé en ce que** la section transversale de l'extrémité du composant d'appui extérieur (3) en contact plan avec le côté intérieur (112) de la région sollicitée par pression (11) présente une forme en L.

4. Ensemble membrane selon la revendication 3, **caractérisé en ce que** la surface d'appui extérieure (31) en contact plan avec le côté intérieur (112) de la région sollicitée par pression (11) présente des propriétés élastiques afin de réduire les tensions dans la membrane élastique à ressort (1).

5. Ensemble membrane selon l'une quelconque des revendications précédentes, **caractérisé en ce que** le composant d'appui radialement extérieur (3) est réalisé par une portion d'extrémité d'un boîtier de capteur du dispositif de mesure de pression.

6. Ensemble membrane selon l'une quelconque des revendications précédentes, **caractérisé en ce que** les composants d'appui (2, 3) sont réalisés sous forme annulaire et le composant d'appui radialement intérieur (2) est en contact plan à la fois avec une surface intérieure (121) de la branche longue radialement intérieure (12) de la forme en U et avec le côté intérieur (112) de la région sollicitée par pression (11) et le composant d'appui radialement extérieur (3) est en contact plan à la fois avec une surface intérieure (131) de la branche radialement extérieure (13) et avec le côté intérieur (112) de la région sollicitée par pression (11).

7. Ensemble membrane selon la revendication 6, **caractérisé en ce que** la membrane élastique à ressort (1) est connectée fixement au composant d'appui radialement intérieur (2) ou est réalisée d'une seule pièce avec celui-ci.

8. Ensemble membrane selon la revendication 6, **caractérisé en ce que** la membrane élastique à ressort (1) est connectée fixement au composant d'appui radialement extérieur (3) et de préférence la membrane élastique à ressort (1) est connectée au boîtier (4) du dispositif de mesure de pression par le biais du composant d'appui radialement extérieur (3).

9. Ensemble membrane selon l'une quelconque des revendications précédentes, **caractérisé en ce que** la membrane élastique à ressort (1) est un composant embouti profond.
